# EUROPÄISCHE PATENTSCHRIFT

(11) **EP 3 525 976 B1**
(45) Veröffentlichungstag und Bekanntmachung des Hinweises auf die Patenterteilung: **16.12.2020**
(21) Anmeldenummer: 16782041.4
(22) Anmeldetag: 13.10.2016
(51) Int. Cl.: B23K 26/14, B23K 26/38, B23K 26/03

(54) **LASERSCHNEIDDÜSE FÜR EINE LASERBEARBEITUNGSANLAGE MIT EINEM KONVERGENZABSCHNITT UND EINEM DIVERGENZABSCHNITT ; LASERBEARBEITUNGSANLAGE MIT EINER SOLCHEN DÜSE ; VERFAHREN ZUM BETREIBEN EINER SOLCHEN LASERBEARBEITUNGSANLAGE**
LASER CUTTING NOZZLE FOR A LASER MACHINING SYSTEM, COMPRISING A CONVERGENCE SECTION AND A DIVERGENCE SECTION; LASER MACHINING SYSTEM COMPRISING SUCH A NOZZLE; AND METHOD FOR OPERATING SUCH A LASER MACHINING SYSTEM
BUSE DE DÉCOUPE LASER POUR UN DISPOSITIF D'USINAGE PAR LASER COMPRENANT UNE PARTIE CONVERGENTE ET UNE PARTIE DIVERGENTE ; DISPOSITIF D'USINAGE PAR LASER COMPRENANT UNE TELLE BUSE ; PROCÉDÉ PERMETTANT DE FAIRE FONCTIONNER UN TEL DISPOSITIF D'USINAGE PAR LASER

(43) Veröffentlichungstag der Anmeldung: 21.08.2019
(73) Patentinhaber: TRUMPF Laser- und Systemtechnik GmbH, 71254 Ditzingen (DE)
(72) Erfinder: SPEKER, Nicolai, 74385 Pleidelsheim (DE); SEEBACH, Johannes, 70193 Stuttgart (DE); KRAMLICH, Olga, 75175 Pforzheim (DE); SCHELLENBERG, Artur, 70836 Gerlingen (DE)
(74) Vertreter: Kohler Schmid Möbus Patentanwälte
(86) Internationale Anmeldenummer: PCT/EP2016/074549
(87) Internationale Veröffentlichungsnummer: WO 2018/068853

(56) Entgegenhaltungen:
- CN-U- 204 234 971
- US-A- 4 031 351
- US-A- 6 003 789
- H. C. MAN ET AL: "Design and characteristic analysis of supersonic nozzles for high gas pressure laser cutting", JOURNAL OF MATERIALS PROCESSING TECHNOLOGY, ELSEVIER, NL, Bd. 63, Nr. 1-3, 1. Januar 1997 (1997-01-01), Seiten 217-222, XP026545314, ISSN: 0924-0136, DOI: 10.1016/S0924-0136(96)02627-1 [gefunden am 1997-01-01]

## Beschreibung

Die Erfindung betrifft eine Laserschneiddüse für eine Laserbearbeitungsanlage gemäß dem Oberbegriff des Anspruchs 1 (siehe z.B. US4 031 351 A).

Des Weiteren betrifft die Erfindung eine Laserbearbeitungsanlage mit einer solchen Laserschneiddüse (siehe Anspruch 15), und ein Verfahren zum Betreiben der Laserbearbeitungsanlage (siehe Anspruch 18).

### Stand der Technik

Moderne Laserbearbeitungsanlagen sind im Allgemeinen in der Lage, bei hohen Bearbeitungsgeschwindigkeiten einwandfreie Schneidergebnisse zu liefern. An Grenzen stoßen sie jedoch bei der Bearbeitung von komplexen dreidimensionalen Werkstücken. Beispielsweise können den Schneidprozess bestimmende Parameter, wie der Düsen-Werkstück-Abstand, die Stellung der Laserdüse usw. aufgrund ungünstiger räumlicher Konstellationen nicht ausreichend konstant gehalten werden bzw. nicht ausreichend präzise eingestellt werden. So kann es bei Schneidarbeiten in Ecken bzw. an Winkeln eines Werkstückes zu Qualitätseinbußen kommen, die z. B. zu einem vermehrten Auftreten von Riefen oder (Mikro-)Graten führen. Darüber hinaus erhöht sich mit steigender Bearbeitungsgeschwindigkeit und mit geringem Düsenabstand zum Werkstück das Risiko auf Bauteilkollisionen z.B. durch von der vorgegebenen Form abweichenden Werkstücken.

Aus der Literatur ist es bekannt, dass die Eigenschaften des aus der Düse austretenden Schneidgasstrahls maßgeblichen Einfluss auf die Qualität der Schneidergebnisse haben. Aus diesem Grunde wurden zur Gasstrahlformung Düsen mit einer Innenkontur bzw. Durchgang vorgeschlagen, die abweichend von Düsen mit einem einfachen konischen Durchgang, mit einem konischzylindrischen, konisch-divergenten bzw. allgemein mit einem konvergent-divergenten Durchgang versehen sind. Beispielhaft wird auf den Fachartikel "Design and Characteristic Analysis of Supersonic Nozzles for High Gas Pressure Laser Cutting" von H. C. Man et al., Journal of Materials Processing Technology, Band 63 (1997), Seiten 217-222 verwiesen.

Eine Laserschneiddüse der eingangs genannten Art mit einem konvergent-divergenten Durchgang ist z. B. aus der US 6,423,928 bekannt. Ausgehend von einem zylindrischen Engstellenabschnitt weist die vorbekannte Düse im Mündungsbereich eine ausgeprägte konische Querschnittserweiterung auf. Durch diese bedingt weist die Düse weiterhin nur eine sehr schmale Stirnfläche am dem Werkstück zugewandten Ende auf, die Empfindlichkeit der Düse für eine kapazitive Abstandsregelung ist daher nur für kleine Bearbeitungsabstände geeignet.

### Aufgabe der Erfindung

Die Erfindung hat sich zur Aufgabe gesetzt, eine Laserschneiddüse bereitzustellen, die eine dreidimensionale Laserschneidbearbeitung mit besseren Schneidergebnissen ermöglicht.

### Beschreibung der Erfindung

Gelöst wird die Aufgabe durch eine Laserschneiddüse mit den Merkmalen von Anspruch 1.

Im Sinne der Erfindung weist die Wandung des konvergent-divergenten Durchgangs im gesamten Divergenzabschnitt höchstens einen Neigungswinkel zur Durchgangs-Längsachse von 5° auf und ist die Länge des Divergenzabschnitts kleiner als das 5-fache des Durchmessers der Engstelle.

Vorzugsweise ist der mittlere Neigungswinkel der Wandung des Durchgangs zur Durchgangs-Längsachse im Divergenzabschnitt kleiner 4,0°. Bei besonders bevorzugten Bauformen der Düse ist der Neigungswinkel sogar kleiner 3,0° oder kleiner 2,0°. Insbesondere ist der mittlere Neigungswinkel aber größer 1,0°.

Aufgrund der Begrenzung des Neigungswinkels auf höchstens 5° im Divergenzabschnitt ist eine wirksame Formung des austretenden Gasstrahls über den gesamten Divergenzabschnitt gewährleistet. Ein randseitiges "Ablösen" bzw. "Abreißen" der Gasströmung, welche unerwünschte Inhomogenität der Gasströmung mit sich bringen, werden verhindert. Trotz des relativ niedrigen maximalen Neigungswinkels, ist der Divergenzabschnitt aber nicht länger als das 5-fache des Durchmessers der Engstelle. Überraschenderweise hat sich gezeigt, dass diese Länge für eine wirksame Gasstrahlformung ausreichend ist. Insbesondere ist sogar eine Länge des Divergenzabschnitts kleiner als das 4-fache oder das 3-fache des Durchmessers der Engstelle ausreichend. Um einen ausreichenden Effekt zu gewährleisten, sollte der Differenzabschnitt vorzugsweise aber zumindest größer als das 2-fache des Durchmessers der Engstelle sein.

Die erfindungsgemäße Formgebung des Durchgangs bewirkt über einen großen Abstand, insbesondere über einen Bereich von 1,5 bis 6 mm, gleichbleibende strömungsdynamische Verhältnisse im Gasstrom nach Verlassen der Düse, d.h. insbesondere bei der Bearbeitung an der Werkstückoberfläche und im Schnittspalt. Dabei bewirkt die erfindungsgemäße Formgebung, dass das Schneidgas zumindest Schallgeschwindigkeit erreicht und diese über eine lange Wirkstrecke erhalten bleibt. Insbesondere ist die Düse derart geformt, dass das Schneidgas bereits an der Engstelle Schallgeschwindigkeit erreicht und anschließend im divergenten Teil der Düse auf Überschallgeschwindigkeit beschleunigt wird.

Im Falle eines bevorzugten Ausführungsbeispiels der Erfindung ist der mittlere Neigungswinkel der Wandung im Konvergenzabschnitt größer 5°. Der Konvergenzabschnitt kann aufgrund des größeren Neigungswinkels kürzer ausgebildet sein, so dass die Düse insgesamt kompakter baut. Im Speziellen weist der Divergenzabschnitt vorteilhafterweise eine Länge auf, die mehr als das 1,4-fache und/oder weniger als das 1,7-fache der Länge des Konvergenzabschnitts beträgt.

Vorzugsweise ist der mittlere Neigungswinkel der Wandung im Konvergenzabschnitt sogar größer 7°. Um unerwünschte Einflüsse auf die Gasströmung zu vermeiden, ist der mittlere Neigungswinkel aber insbesondere kleiner 15°, vorzugsweise sogar kleiner 13°.

Gemäß der Erfindung geht der Konvergenzabschnitt an der Engstelle unmittelbar in den Divergenzabschnitt über. Aufgrund des unmittelbaren Aufeinanderfolgens des Konvergenz- und des Divergenzabschnitts wird der gewünschte Effekt der Erhöhung der Strömungsgeschwindigkeit (vorzugsweise auf Überschallgeschwindigkeit) besonders ausgeprägt. Zwischen dem Konvergenz- und dem Divergenzabschnitt ist gemäß der Erfindung ein zylindrischer Engstellenabschnitt mit einer Länge vorgesehen.

In diesem Sinne ist auch ein bevorzugtes Ausführungsbeispiel von Vorteil, bei welchem der Konvergenzabschnitt an der Engstelle kantenlos und/oder allmählich in den Divergenzabschnitt übergeht. Es folgt also keine sprunghafte Änderung des Neigungswinkels der Wandung am Übergang von Konvergenz- zu Divergenzabschnitt. Die Ausbildung beispielsweise einer nachteiligen Kante, welche unerwünschten Einfluss auf die Gasströmung nehmen kann, wird vermieden.

Insgesamt ist eine Bauform der Düse bevorzugt, bei welcher die Wandung entlang des gesamten Durchgangs einen kontinuierlichen, kantenlosen Verlauf aufweist. Im Falle eines besonders bevorzugten Ausführungsbeispiels weist der Konvergenzabschnitt zumindest abschnittsweise eine zur Durchgangs-Längsachse gekrümmte Wandung auf, vorzugsweise mit einem Krümmungsradius zwischen 4 und 8 mm.

Alternativ oder ergänzend weist der Divergenzabschnitt zumindest abschnittsweise eine zur Durchgangs-Längsachse gekrümmte Wandung auf, vorzugsweise mit einem Krümmungsradius zwischen 20 und 30 mm.

Um eine definierte Eingangsströmung zu gewährleisten, weist eine bevorzugte Variante der Düse zusätzlich einen Einlaufabschnitt auf, der eingangsseitig vor dem Konvergenzabschnitt angeordnet ist. Vorzugsweise ist der Einlaufabschnitt zylindrisch.

Zur Gewährleistung von Schneideigenschaften, die von der Schneidrichtung unabhängig sind, weisen der Einlauf- und/oder der Divergenz- und/oder Konvergenzabschnitt vorzugsweise einen kreisförmigen Querschnitt auf.

Eine möglichst kompakt bauende Düse ergibt sich, indem der Durchgang ausschließlich durch einen zylindrischen Einlaufabschnitt, den Konvergenz- und den Divergenzabschnitt gebildet ist. Unter diesem Aspekt ist auch ein Ausführungsbeispiel bevorzugt, bei welchem es sich bei der Düse um eine Einlochdüse handelt.

Zur Ausbildung einer homogenen Gasströmung auch bei Abständen von mehreren Millimetern von der Düsenmündung, haben sich verschiedene bauliche Maßnahmen als besonders vorteilhaft herausgestellt. So sollte die Querschnittsfläche der Mündung kleiner als die Querschnittsfläche des Eingangs sein. Vorzugsweise beträgt sie mehr als 15% und/oder weniger als 75% der Querschnittsfläche des Eingangs. Die Querschnittsfläche der Engstelle beträgt vorzugsweise mehr als 20% und/oder weniger als 40% der Querschnittsfläche des Eingangs. Die Querschnittsfläche der Mündung beträgt mehr als 140%, vorzugsweise mehr als 180% und/oder weniger als 250%, vorzugsweise weniger als 220%, der Querschnittsfläche der Engstelle.

Insbesondere für die dreidimensionale Laserschneidbearbeitung von Bauteilen, vorzugsweise Metallprofilbauteilen, ist eine Bauform der Düse mit folgenden Durchmessergrößen von Vorteil. Vorzugsweise beträgt der Durchmesser der Mündung zwischen 1,8 und 3,5 mm, der Durchmesser der Engstelle zwischen 1,3 und 3,0 mm und/oder der Durchmesser des Eingangs zwischen 4,0 und 5,0 mm.

Im Falle eines bevorzugten Ausführungsbeispiels weist der Konvergenzabschnitt eine Länge zwischen 3,5 und 4,5 mm, der Divergenzabschnitt eine Länge zwischen 5,0 und 7,0 mm und/oder der Einlaufabschnitt eine Länge zwischen 1,0 und 1,5 mm auf.

Die Außenkontur der Laserschneiddüse spielt vor allem in zweierlei Hinsicht eine besondere Rolle. Zum einen sollte die Laserschneiddüse für den Einsatz bei einer dreidimensionalen Werkstückbearbeitung möglichst kleinbauend sein, damit eine kollisionsfreie Bearbeitung auch bei sehr beengten Platzverhältnissen gewährleistet werden kann. Außerdem wird die Laserschneiddüse bevorzugt zusammen mit einer kapazitiven Düsen-Werkstück-Abstandsregelung eingesetzt. Die Außenkontur, insbesondere die werkstücknahe Oberfläche der Düse, hat maßgeblichen Einfluss auf die Aussagekraft des Kapazitätsmesssignals für die Abstandsregelung. Im Folgenden erläuterte Ausführungsbeispiele zeichnen sich daher hinsichtlich einer Verwendung der Düse mit einer kapazitiven Abstandsregelung durch besondere Vorteile aus.

Vorzugsweise beträgt der mündungsseitige Außendurchmesser der Düse zwischen 3,0 und 4,6 mm. Des Weiteren weist eine mündungsseitige konische Umfangsfläche eine Länge zwischen 4,0 und 5,0 mm auf und/oder besitzt einen Neigungswinkel zur Durchgangs-Längsachse zwischen 20 und 30°.

Baulich vorteilhaft ist ein besonders bevorzugtes Ausführungsbeispiel, bei welchem die Düse in Längsrichtung in etwa auf Höhe der Engstelle den größten Außenumfang aufweist.

Handhabungstechnische Vorteile ergeben sich, indem die mündungsseitige konische Umfangsfläche der Düse im Bereich mit dem größten Außendurchmesser der Düse in eine zylindrische Umfangsfläche übergeht, die vorzugsweise mit einer Rändelung versehen ist.

Zur Befestigung der Düse an einen Bearbeitungskopf einer Laserbearbeitungsanlage ist eingangsseitig an der Umfangsfläche der Düse ein Außengewinde eingebracht. Alternativ kann die Befestigungseinrichtung beliebig anders ausgestaltet sein, z.B. mittels Ringspannelementen.

Fertigungstechnisch und für die Verwendung mit einer kapazitiven Abstandsregelung ist es von Vorteil, wenn die Düse einen einstückigen Grundkörper aus Metall, vorzugsweise aus Kupfer, aufweist, wobei der Grundköper zumindest den Divergenzabschnitt des Durchgangs bildet. Im Speziellen ist die Düse einstückig aus Metall, vorzugsweise Kupfer, hergestellt.

Ebenfalls für die Verwendung mit einer kapazitiven Abstandsreglung von Vorteil, ist eine Düsenbauart mit einer senkrecht zur Durchgangs-Längsachse verlaufenden Stirnfläche, welche die Mündung umgibt. In Praxis bewährt hat sich eine Ausbildung der Stirnfläche, welche die Mündung ringförmig umgibt, mit einer Breite von 0,3 bis 0,7 mm. Durch diese wird eine ausreichend hohes Ansprechverhalten erreicht, das auch eine Abstandsregelung für große Arbeitsabstände (Abstand Stirnfläche zu Werkstück) im Bereich über 2mm, insbesondere im Bereich von bis zu 6mm, ermöglicht. Durch eine Bearbeitung mit größerem Arbeitsabstand wird die Prozesssicherheit erhöht, wodurch auch eine störungsfreie Bearbeitung bei hohen Geschwindigkeiten im Bereich von über 10m/min, insbesondere sogar im Bereich von 30 bis 50 m/min Vorschubgeschwindigkeit durchführbar wird.

Als Erfindung wird ebenfalls eine Laserbearbeitungsanlage mit einer vorstehend und nachfolgend beschriebenen Laserschneiddüse angesehen. Insbesondere ergeben sich die Vorteile der erfindungsgemäßen Düsenausbildung, wenn die Düse zusammen mit einer kapazitiven Abstandsregelung des Düsen-Werkstücks-Abstands verwendet wird, welche zur Regelung die Kapazität zwischen Düse und Werkstück bestimmt. Vorzugsweise weist die Anlage einen mit der Laserschneiddüse ausgestatteten Bearbeitungskopf zur dreidimensionalen Laserschneidbearbeitung auf.

Als Laserquelle weist die Anlage vorzugsweise einen CO₂- oder Festkörperlaser, insbesondere einen Scheibenlaser, mit einer Maximalleistung von mindestens 2kW auf. Alternativ können auch Faserlaser und Diodenlaser eingesetzt werden.

Um sicherzustellen, dass der Laserstrahl aufgrund eines zu großen Divergenzwinkels nicht an der Innenwandung der Düse streift, ist bei einem bevorzugten Ausführungsbeispiel mittels der Laserquelle der Anlage ein Laserstrahl mit einem Strahlparameterprodukt ≤ 8mm*mrad, vorzugsweise ≤ 4 mm*mrad, noch vorzugsweise ≤ 2 mm*mrad, erzeugbar.

Des Weiteren wird als Erfindung ein Verfahren zum Betreiben einer Laserbearbeitungsanlage unter Verwendung der vorstehend und nachfolgend beschriebenen Laserschneiddüse angesehen. Insbesondere wird eine dreidimensionale Laserschneidbearbeitung mit der Düse durchgeführt, bei welcher ein Schneidgas mit einem Druck zwischen 8 und 23 bar der Laserschneiddüse zugeführt wird und zumindest zeitweise ein Schneiden eines Metallprofils mit einer Werkstückdicke von 1 bis 4 mm bei einem Abstand der Düse von der Werkstückoberfläche in einem Abstandsbereich zwischen 3 und 6 mm erfolgt.

In der Regel wird mit einem Strahleinfallswinkel auf die Werkstückoberfläche von 90° geschnitten. Kleine Konturen können aber beispielsweise nur mit den für die Schrägstellung des Schneidkopfs vorgesehenen Schwenkachsen geschnitten werden, ohne die Translationsachsen zu nutzen, dabei können die Konturen unter einer Schrägstellung von bis zu 30° geschnitten werden.

Als Schneidgas wird vorzugsweise Stickstoff und/oder Druckluft verwendet.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert. Im Einzelnen zeigen:
- **Fig. 1**: eine mittige Schnittdarstellung einer Laserschneiddüse,
- **Fig. 2**: eine Seitenansicht der Laserschneiddüse gemäß Fig. 1 und
- **Fig. 3**: eine Laserbearbeitungsanlage, welche eine Laserschneiddüse nach Fig. 1 zur dreidimensionalen Werkstückbearbeitung aufweist.

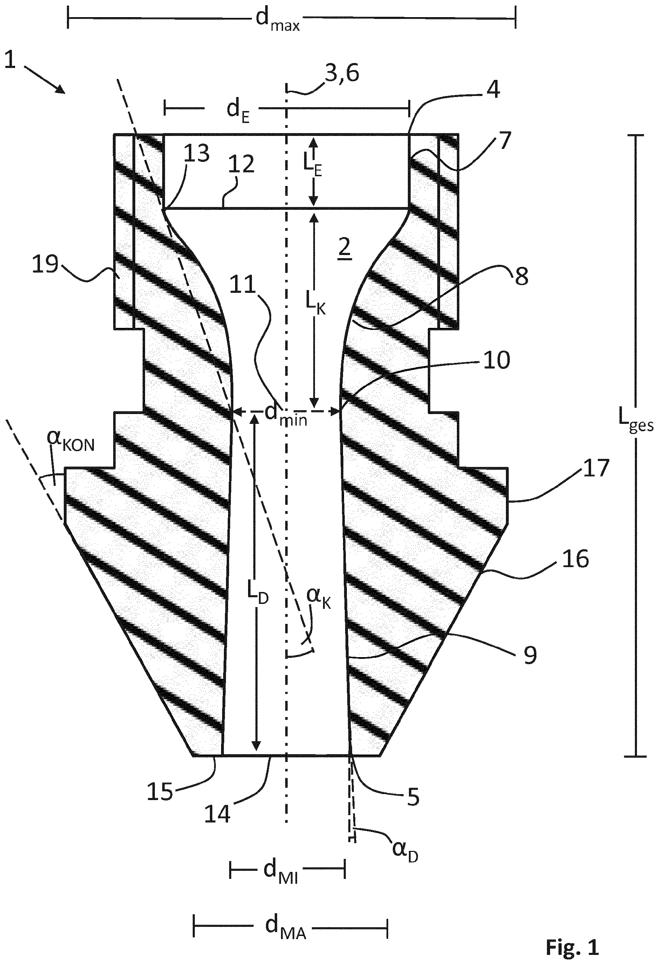

Figur 1 zeigt eine Schnittdarstellung einer Laserschneiddüse **1** für eine Laserbearbeitungsanlage. Bei der Düse 1 handelt es sich um eine Einlochdüse, die einstückig aus Kupfer hergestellt ist. Figur 1 ist ein mittiger Längsschnitt entlang der Düsenlängsachse **3** zu entnehmen. Die Düse 1 ist im Wesentlichen als zur Längsachse 2 rotationssymmetrischer Körper ausgebildet.

Die Düse 1 weist einen mittigen Durchgang **2** für einen Laserstrahl und Schneidgas auf, der sich von einem Düseneingang **4** bis zu einer Düsenmündung **5** entlang einer Durchgangs-Längsachse **6** erstreckt. Die Durchgangs-Längsachse 6 fällt mit der Düsenlängsachse 3 zusammen.

Der Durchgang 2 besteht aus einem zylindrischen Einlaufabschnitt **7,** einem kontinuierlich konvergierenden Konvergenzabschnitt **8** und einem Divergenzabschnitt **9.** Der Durchgang 2 weist über seine gesamte Länge L_{ges}, d. h über sämtliche Abschnitte 7, 8, 9 hinweg, einen kreisförmigen Querschnitt auf. Der Konvergenzabschnitt 8 geht kontinuierlich und kantenlos und allmählich an einer Engstelle **10** in den Divergenzabschnitt 9 über.

Zur Ausbildung einer austretenden Gasströmung, die über einen großen Abstandsbereich von bis zu 6 mm homogene und günstige Verhältnisse für ein Laserschmelzschneiden aufweist, ist der Durchgang 2 bei dem gezeigten Ausführungsbeispiel wie folgt geformt.

Am Einlaufabschnitt 7 weist der Durchgang 2 einen Durchmesser d_{E} von 4,4 mm auf. An der Engstelle ist der Durchmesser dₘᵢₙ 1,6 mm. Die Mündung d_{MI} hat einen Durchmesser von 1,94 mm. Folglich ist die Querschnittsfläche **11** an der Engstelle 10 weniger als 40% der Querschnittsfläche **12** am Eingang **13** des Konvergenzabschnitts 8 (entspricht der Querschnittsfläche über den gesamten Einlaufabschnitt, da dieser zylindrisch ist). Im Speziellen beträgt der Engstellen-Querschnitt 12 nur 13% der Querschnittsfläche 12 am Eingang 13 des Konvergenzabschnitts 8. Bis zur Mündung 5 hat sich der Durchgang 2 wieder auf über 130%, im Speziellen auf 147%, der Querschnittsfläche 11 an der Engstelle kontinuierlich erweitert. Die Querschnittsfläche **14** der Mündung 5 beträgt nur 19% der Querschnittsfläche 12 am Eingang 4 des Durchgangs 2.

Um ein "Abreißen" der Strömung im Randbereich zu vermeiden, besitzt die Wandung des Durchgangs 2 im gesamten Divergenzabschnitt 9 höchstens einen Neigungswinkel zur Durchgangs-Längsachse 6 von 5°. Der mittlere Neigungswinkel α_{D} der Wandung des Durchgangs zur Durchgangs-Längsachse 6 im Divergenzabschnitt 9 ist 1,5°. Dahingegen ist der mittlere Neigungswinkel α_{K} der Wandung des Durchgangs zur Durchgangs-Längsachse 6 im Konvergenzabschnitt 8 mit 12° wesentlich größer.

Der Einlaufabschnitt 7 besitzt eine Länge L_{E} von 1,3 mm, der Konvergenzabschnitt 8 eine Länge L_{K} von 4,0 mm und der Divergenzabschnitt 9 eine Länge L_{D} von 6,5 mm. Die Gesamtlänge L_{ges} des Durchgangs 2 beträgt folglich 11,8 mm. Die Länge L_{D} des Divergenzabschnitts 9 ist ca. das 1,63-fache der Länge L_{K} des Konvergenzabschnitts 8.

Maßgeblich ist weiterhin, dass die Länge L_{D} des Divergenzabschnitts 9 kleiner als das 5-fache des Durchmessers dₘᵢₙ der Engstelle 10 ist. Im Speziellen beträgt die Länge L_{D} das 4,1-fache des Engstellen-Durchmessers dₘᵢₙ.

Der Konvergenzabschnitt 8 sowie der Divergenzabschnitt 9 sind nicht streng konisch ausgebildet. Zumindest abschnittsweise ist die Wandung zur Durchgangs-Längsachse 6 gekrümmt (Konvergenzabschnitt 8: Krümmungsradius von z. B. 6 mm; Divergenzabschnitt 9: Krümmungsradius von z. B. 26 mm).

Der mündungsseitige Außendurchmesser d_{MA} der Düse 1 ist 3,15 mm. Die senkrecht zur Durchgangs-Längsachse 6 verlaufende Stirnfläche **15,** welche ringförmig die Mündung 5 umgibt, weist eine Breite von 0,605 mm auf. Durch diese wird ein ausreichend hohes Ansprechverhalten für eine kapazitive Abstandsregelung erreicht, das auch eine Abstandsregelung im Bereich von bis zu 6mm ermöglicht. Durch eine Bearbeitung mit größerem Arbeitsabstand wird die Prozesssicherheit erhöht, wodurch auch eine störungsfreie Bearbeitung bei hohen Geschwindigkeiten im Bereich von 10 - 50 m/min Vorschubgeschwindigkeit durchführbar wird.

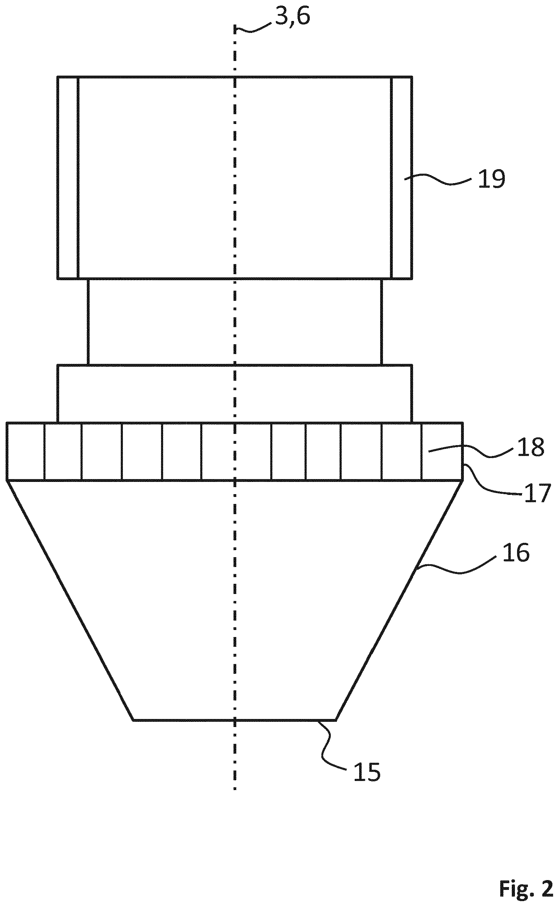

Anhand der Figur 2, welche die Laserschneiddüse 1 in einer Seitenansicht zeigt, werden weitere Details der Außenkontur der Düse 1 erläutert.

An die mündungsseitige Stirnfläche 15 grenzt eine konische Umfangsfläche **16** mit einer Länge L_{KON} von 4,5 mm und einem Neigungswinkel α_{KON} zur Durchgangs-Längsachse 6 von 28°. In etwa auf Höhe der Engstelle 10 geht die konische Umfangsfläche 16 in eine zylindrische Umfangsfläche **17** über, die den größten Außendurchmesser dₘₐₓ mit 8,0 mm besitzt. Die zylindrische Umfangsfläche 17 ist mit einer Rändelung **18** versehen, welche als Griffelement beim Handhaben z. B. Einschrauben der Düse 1 in eine Düsenaufnahme eines Bearbeitungskopfs dient. Eingangsseitig ist an der Umfangsfläche der Düse 1 ein Außengewinde **19** eingebracht, mittels dessen die Düse beispielsweise in eine Düsenaufnahme eines Bearbeitungskopfes einer Laserbearbeitungsanlage eingeschraubt werden kann.

Die Laserschneiddüse 1 gemäß Fig. 1 stellt ein bevorzugtes Beispiel einer Laserschneiddüse 1 für die dreidimensionale Laserschneidbearbeitung von metallischen Profilen dar. Die Formgebung des Durchgangs 2 bewirkt abstandsunabhängig gleichbleibende strömungsdynamische Verhältnisse an der Werkstückoberfläche und im Schnittspalt. Die Formung der Außenkontur zeichnet sich durch günstige Eigenschaften für eine kapazitive Abstandsregelung des Düsen-Werkstück-Abstands aus.

Die Parameter von weiteren bevorzugten Ausführungsbeispielen einer Laserschneiddüse werden in Tabelle 1 zusammen mit den entsprechenden Parametern der Düse 1 gemäß Figur 1 aufgeführt, wobei sämtliche Beispielsdüsen zumindest in Bezug auf die Gesamtlänge L_{ges}, den eingangsseitigen Innen- (d_{E}) und Außendurchmesser, die Längen L_{E}, L_{K}, L_{D} des Einlaufs-, Konvergenz- und Divergenzabschnitts 7, 8, 9, den maximalen Außendurchmesser dₘₐₓ sowie die Länge L_{KON} der konischen Umfangsfläche 16 übereinstimmen.

**Tabelle 1: Parameter mehrere Ausführungsbeispiele von Laserschneiddüsen. Beispiel Nr. 1 entspricht der Düse gemäß Figur 1.**

| **Nr.** | **d_{MI} [mm]** | **d_{MA} [mm]** | **dₘᵢₙ [mm]** | **α_{D} [°]** | **α_{KON} [°]** | **α_{K} [°]** | **L_{D} /dₘᵢₙ** | **d_{MI}² /dₘᵢₙ²** | **d_{MI}² /d_{E}²** | **dₘᵢₙ² /d_{E}²** |
|---|---|---|---|---|---|---|---|---|---|---|
| 1 | 1,94 | 3,15 | 1,6 | 1,5 | 28 | 12 | 4,1 | 19% | 147% | 13% |
| 2 | 2,352 | 3,15 | 1,8 | 2,4 | 28 | 11 | 3,6 | 29% | 171% | 17% |
| 3 | 2,855 | 4,15 | 2 | 3,8 | 23 | 10 | 3,3 | 42% | 204% | 21% |
| 4 | 3,398 | 4,15 | 2,6 | 3,5 | 23 | 8 | 2,5 | 60% | 171% | 35% |
| 5 | 3,7 | 4,5 | 2,6 | 4,8 | 21 | 8 | 2,5 | 71% | 203% | 35% |

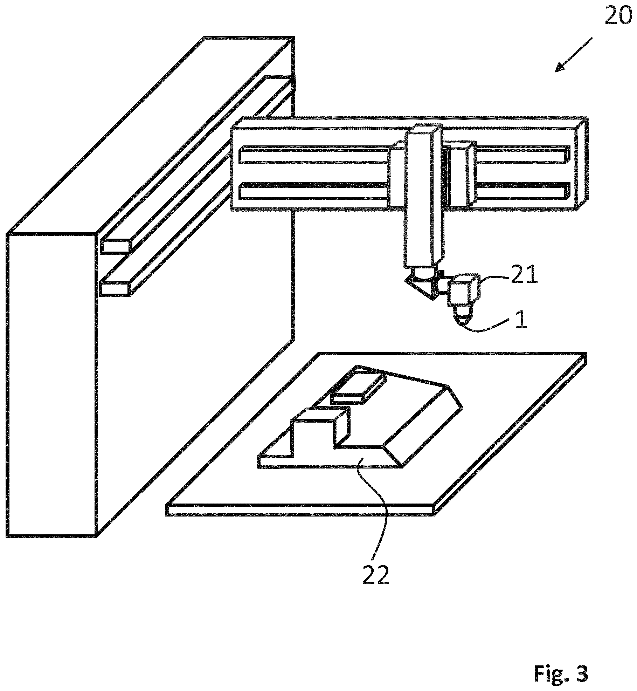

In Figur 3 ist eine Laserbearbeitungsanlage 20 mit einer Laserschneiddüse 1 gemäß einem der vorigen Beispiele gezeigt. Die Laserbearbeitungsanlage 20 weist einen mit der Laserschneiddüse 1 ausgestatteten Bearbeitungskopf 21 zur dreidimensionalen Laserschneidbearbeitung auf. Als Laserquelle dient ein nicht näher gezeigter Diodenlaser, CO₂- oder Festkörperlaser, insbesondere ein Scheibenlaser, vorzugsweise mit einer Maximalleistung von mindestens 2kW.

Die Anlage 21 weist eine kapazitive Abstandsregelung des Düsen-Werkstücks-Abstands auf.

Mittels der Anlage 21 erfolgt beispielsweise eine dreidimensionale Laserschneidbearbeitung mit der Düse 1, bei welcher ein Schneidgas (z. B. Stickstoff oder Argon) mit einem Druck zwischen 8 und 23 bar zugeführt wird. Zumindest zeitweise wird ein Metallprofil 22 mit einer Werkstückdicke von 1 bis 4 mm bei einem Abstand der Düse 1 von der Werkstückoberfläche in einem Abstandsbereich zwischen 3 und 6 mm geschnitten.

Beispielsweise werden Baustahl und Edelstahl mit einer Blechdicke von 1mm unter Einsatz einer Laserquelle mit einer Leistung von 5kW mit 50m/min geschnitten.

## Patentansprüche

1. Laserschneiddüse (1) für eine Laserbearbeitungsanlage (20) mit einem zwischen einem Düseneingang (4) und einer Düsenmündung (5) entlang einer Durchgangs-Längsachse (6) verlaufenden Durchgang (2) für den Laserstrahl und Schneidgas, wobei der Durchgang (2) in Richtung seiner Mündung (5) in einem Konvergenzabschnitt (8) bis zu einer Engstelle (10) des Durchgangs (2) auf kleiner als 40% der Querschnittsfläche (12) am Eingang (13) des Konvergenzabschnitts (8) kontinuierlich konvergiert, wobei der Durchgang (2) ausgehend von der Engstelle (10) in einem Divergenzabschnitt (9) bis zur Mündung (5) des Durchgangs (2) auf über 130% der Querschnittsfläche (11) an der Engstelle (10) kontinuierlich divergiert,
**dadurch gekennzeichnet, dass**
im gesamten Divergenzabschnitt (9) die Wandung des Durchgangs (2) höchstens einen Neigungswinkel zur Durchgangs-Längsachse (6) von 5° aufweist, und die Länge (Lo) des Divergenzabschnitts (9) kleiner als das 5-fache des Durchmessers (dₘᵢₙ) der Engstelle (10) ist, und wobei kein zylindrischer Engstellenabschnitt mit einer Länge zwischen dem Konvergenzabschnitt (8) und dem Divergenzabschnitt (9) vorgesehen ist, so dass der Konvergenzabschnitt (8) an der Engstelle (10) unmittelbar in den Divergenzabschnitt (9) übergeht.

2. Laserschneiddüse (1) nach Anspruch 1, **dadurch gekennzeichnet, dass** der mittlere Neigungswinkel (α_{K}) der Wandung des Durchgangs (2) zur Durchgangs-Längsachse (6) im Konvergenzabschnitt (8) größer 5° ist, vorzugsweise größer 7°, und/oder kleiner 15°, vorzugsweise kleiner 13°.

3. Laserschneiddüse (1) nach einem der vorigen Ansprüche, **dadurch gekennzeichnet, dass** der mittlere Neigungswinkel (α_{D}) der Wandung des Durchgangs (2) zur Durchgangs-Längsachse (6) im Divergenzabschnitt (9) kleiner 4,0°, vorzugsweise kleiner 3,0°, noch vorzugsweise kleiner 2,0° und/oder größer 1,0°.

4. Laserschneiddüse (1) nach einem der vorigen Ansprüche, **dadurch gekennzeichnet, dass** der Konvergenzabschnitt (8) an der Engstelle (10) kantenlos in den Divergenzabschnitt (9) übergeht.

5. Laserschneiddüse (1) nach einem der vorigen Ansprüche, **dadurch gekennzeichnet, dass** der Durchgang (2) zusätzlich einen, insbesondere zylindrischen, Einlaufabschnitt (7) aufweist, der eingangsseitig vor dem Divergenzabschnitt (9) angeordnet ist.

6. Laserschneiddüse (1) nach einem der vorigen Ansprüche, **dadurch gekennzeichnet, dass** der Divergenzabschnitt (9) länger als der Konvergenzabschnitt (8) ist, vorzugsweise eine Länge (L_{D}) aufweist, die mehr als das 1,4-fache und/oder weniger als das 1,7-fache der Länge (L_{K}) des Konvergenzabschnitts (8) beträgt.

7. Laserschneiddüse (1) nach einem der vorigen Ansprüche, **dadurch gekennzeichnet, dass** die Länge (L_{D}) des Divergenzabschnitts (9) kleiner als das 4-fache, vorzugsweise kleiner als das 3-fache, des Durchmessers (dₘᵢₙ) der Engstelle (10) ist und/oder größer als das 2-fache des Durchmessers (dₘᵢₙ) der Engstelle (10).

8. Laserschneiddüse (1) nach einem der vorigen Ansprüche, **dadurch gekennzeichnet, dass** die Querschnittsfläche (14) der Mündung (5) mehr als 140%, vorzugsweise mehr als 180% und/oder weniger als 250%, vorzugsweise weniger als 220%, der Querschnittsfläche (11) der Engstelle (10) beträgt.

9. Laserschneiddüse (1) nach einem der vorigen Ansprüche, **dadurch gekennzeichnet, dass** der Konvergenzabschnitt (8) zumindest abschnittsweise eine zur Durchgangs-Längsachse (6) gekrümmte Wandung aufweist, vorzugsweise mit einem Krümmungsradius zwischen 4 und 8 mm, und/oder
**dadurch gekennzeichnet, dass** der Divergenzabschnitt (9) zumindest abschnittsweise eine zur Durchgangs-Längsachse (6) gekrümmte Wandung aufweist, vorzugsweise mit einem Krümmungsradius zwischen 20 und 30 mm.

10. Laserschneiddüse (1) nach einem der vorigen Ansprüche, **dadurch gekennzeichnet, dass** der Durchmesser (d_{MI}) der Mündung (5) zwischen 1,8 und 3,5 mm beträgt,
und/oder
**dadurch gekennzeichnet, dass** der Durchmesser (dₘᵢₙ) der Engstelle (10) zwischen 1,3 und 3,0 mm beträgt.

11. Laserschneiddüse (1) nach einem der vorigen Ansprüche, **dadurch gekennzeichnet, dass** der Konvergenzabschnitt (8) eine Länge (L_{K}) zwischen 3,5 und 4,5 mm aufweist, und/oder
**dadurch gekennzeichnet, dass** der Divergenzabschnitt (9) eine Länge (Lo) zwischen 5,0 und 7,0 mm aufweist.

12. Laserschneiddüse (1) nach einem der vorigen Ansprüche, **dadurch gekennzeichnet, dass** der mündungsseitige Außendurchmesser (d_{MA}) der Düse (1) zwischen 3,0 und 5 mm beträgt.

13. Laserschneiddüse (1) nach einem der vorigen Ansprüche, **dadurch gekennzeichnet, dass** die Düse (1) mündungsseitig eine konische Umfangsfläche (16) aufweist, welche eine Länge (L_{KON}) zwischen 4,0 und 5,0 mm aufweist und vorzugsweise einen Neigungswinkel (α_{KON}) zur Durchgangs-Längsachse (6) zwischen 20 und 30° besitzt.

14. Laserschneiddüse (1) nach einem der vorigen Ansprüche, **dadurch gekennzeichnet, dass** die Düse (1) eine, insbesondere senkrecht zur Durchgangs-Längsachse (6) verlaufende, Stirnfläche (15) aufweist, welche die Mündung (5) ringförmig umgibt, und eine Breite von 0,3 bis 0,7 mm aufweist.

15. Laserbearbeitungsanlage (20) mit einer Laserschneiddüse (1) nach einem der vorigen Ansprüche, wobei die Anlage bevorzugt eine kapazitive Abstandsregelung des Düsen-Werkstücks-Abstands aufweist, welche zur Regelung die Kapazität zwischen Düse (1) und Werkstück (22) bestimmt.

16. Laserbearbeitungsanlage (20) nach Anspruch 15, **dadurch gekennzeichnet, dass** die Anlage (20) einen mit der Laserschneiddüse (1) ausgestatteten Bearbeitungskopf (21) zur dreidimensionalen Laserschneidbearbeitung aufweist, und/oder
**dadurch gekennzeichnet, dass** die Anlage (1) als Laserquelle einen Diodenlaser, CO2- oder Festkörperlaser, insbesondere einen Scheibenlaser, vorzugsweise mit einer Maximalleistung von mindestens 2kW aufweist.

17. Laserbearbeitungsanlage (20) nach einem der Ansprüche 15 oder 16, **dadurch gekennzeichnet, dass** mittels der Laserquelle der Anlage (1) ein Laserstrahl mit einem Strahlparameterprodukt ≤ 8mm*mrad, vorzugsweise ≤ 4 mm*mrad, noch vorzugsweise ≤ 2 mm*mrad, erzeugbar ist.

18. Verfahren zum Betreiben einer Laserbearbeitungsanlage (1) nach einem der Ansprüche 15 bis 17, **dadurch gekennzeichnet, dass** eine dreidimensionale Laserschneidbearbeitung mit der Düse (1) durchgeführt wird, bei welcher ein Schneidgas mit einem Druck zwischen 8 und 23 bar eingangsseitig der Düse (1) zugeführt wird und zumindest zeitweise ein Schneiden eines Metallprofils (22) mit einer Werkstückdicke von 1 bis 4 mm bei einem Abstand der Düse (1) von der Werkstückoberfläche in einem Abstandsbereich zwischen 2 und 6 mm erfolgt.

## Claims

1. Laser cutting nozzle (1) for a laser machining unit (20), comprising a passage (2) for the laser beam and cutting gas, which passage extends between a nozzle inlet (4) and a nozzle mouth (5), along a passage longitudinal axis (6), the passage (2) converging continuously, towards the mouth (5) thereof, in a convergence portion (8), as far as a constriction (10) of the passage (2), to less than 40% of the cross-sectional area (12) at the inlet (13) of the convergence portion (8), the passage (2) diverging continuously in a divergence portion (9), proceeding from the constriction (10), as far as the mouth (5) of the passage (2), to over 130% of the cross-sectional area (11) at the constriction (10), **characterized in that**, in the entire divergence portion (9), the wall of the passage (2) is at an angle of inclination relative to the passage longitudinal axis (6) of at most 5°, and the length (L_{D}) of the divergence portion (9) is less than 5 times the diameter (dₘᵢₙ) of the constriction (10), and wherein no cylindrical constriction portion having a length is provided between the convergence portion (8) and the divergence portion (9), so that the convergence portion (8) transitions directly into the divergence portion (9) at the constriction (10).

2. Laser cutting nozzle (1) according to claim 1, **characterized in that** the average angle of inclination (α_{K}) of the wall of the passage (2) relative to the passage longitudinal axis (6) in the convergence portion (8) is greater than 5°, preferably greater than 7°, and/or less than 15°, preferably less than 13°.

3. Laser cutting nozzle (1) according to either of the preceding claims, **characterized in that** the average angle of inclination (α_{D}) of the wall of the passage (2) relative to the passage longitudinal axis (6) in the divergence portion (9) is less than 4.0°, preferably less than 3.0°, more preferably less than 2.0°, and/or greater than 1.0°.

4. Laser cutting nozzle (1) according to any of the preceding claims, **characterized in that** the convergence portion (8) transitions in an edgeless manner into the divergence portion (9) at the constriction (10).

5. Laser cutting nozzle (1) according to any of the preceding claims, **characterized in that** the passage (2) additionally comprises an in particular cylindrical inflow portion (7) that is arranged upstream of the divergence portion (9), on the inlet side.

6. Laser cutting nozzle (1) according to any of the preceding claims, **characterized in that** the divergence portion (9) is longer than the convergence portion (8), and preferably has a length (L_{D}) that is more than 1.4 times and/or less than 1.7 times the length (L_{K}) of the convergence portion (8).

7. Laser cutting nozzle (1) according to any of the preceding claims, **characterized in that** the length (L_{D}) of the divergence portion (9) is less than 4 times, preferably less than 3 times, the diameter (dₘᵢₙ) of the constriction (10), and/or is more than twice the diameter (dₘᵢₙ) of the constriction (10).

8. Laser cutting nozzle (1) according to any of the preceding claims, **characterized in that** the cross-sectional area (14) of the mouth (5) is more than 140%, preferably more than 180%, and/or less than 250%, preferably less than 220%, of the cross-sectional area (11) of the constriction (10).

9. Laser cutting nozzle (1) according to any of the preceding claims, **characterized in that** the convergence portion (8) comprises a wall that is curved towards the passage longitudinal axis (6), at least in portions, which wall preferably has a radius of curvature of between 4 and 8 mm, and/or **characterized in that** the divergence portion (9) comprises a wall that is curved towards the passage longitudinal axis (6), at least in portions, which wall preferably has a radius of curvature of between 20 and 30 mm.

10. Laser cutting nozzle (1) according to any of the preceding claims, **characterized in that** the diameter (d_{MI}) of the mouth (5) is between 1.8 and 3.5 mm and/or **characterized in that** the diameter (dₘᵢₙ) of the constriction (10) is between 1.3 and 3.0 mm.

11. Laser cutting nozzle (1) according to any of the preceding claims, **characterized in that** the length (L_{K}) of the convergence portion (8) is between 3.5 and 4.5 mm and/or **characterized in that** the length (L_{D}) of the divergence portion (9) is between 5.0 and 7.0 mm.

12. Laser cutting nozzle (1) according to any of the preceding claims, **characterized in that** the outside diameter (d_{MA}) of the nozzle (1) on the mouth side is between 3.0 and 5 mm.

13. Laser cutting nozzle (1) according to any of the preceding claims, **characterized in that** the nozzle (1) comprises a conical peripheral surface (16) on the mouth side that has a length (L_{KON}) of between 4.0 and 5.0 mm and is preferably at an angle of inclination (α_{KON}) relative to the passage longitudinal axis (6) of between 20 and 30°.

14. Laser cutting nozzle (1) according to any of the preceding claims, **characterized in that** the nozzle (1) comprises an end face (15) that in particular extends perpendicularly to the passage longitudinal axis (6), annularly surrounds the mouth (5), and has a width of from 0.3 to 0.7 mm.

15. Laser machining unit (20) comprising a laser cutting nozzle (1) according to any of the preceding claims, wherein the unit preferably has capacitive distance control of the nozzle-workpiece distance, which control determines the capacitance between the nozzle (1) and the workpiece (22) for the purpose of the control.

16. Laser machining unit (20) according to claim 15, **characterized in that** the unit (20) comprises a machining head (21) that is equipped with the laser cutting nozzle (1) and is intended for three-dimensional laser cutting machining and/or **characterized in that** the unit (1) comprises a laser diode, a CO₂ or solid-state laser, in particular a disc laser, preferably having a maximum power of at least 2 kW, as the laser source.

17. Laser machining unit (20) according to one of claims 15 or 16, **characterized in that** the laser source of the unit (1) can generate a laser beam having a beam parameter product of ≤ 8mm mrad, preferably ≤ 4 mm mrad, more preferably ≤ 2 mm mrad.

18. Method for operating a laser machining unit (1) according to any of claims 15 to 17, **characterized in that** three-dimensional laser cutting machining is carried out using the nozzle (1), in which machining a cutting gas is fed to the nozzle (1), on the inlet side, at a pressure of between 8 and 23 bar, and a metal profile (22) having a workpiece thickness of from 1 to 4 mm is cut, at least intermittently, at a distance between the nozzle (1) and the workpiece surface that is in a distance range of between 2 and 6 mm.

## Revendications

1. Buse de découpe au laser (1) pour un système d'usinage par laser (20) comportant un passage (2) pour le faisceau laser et le gaz de découpe, lequel passage s'étend entre une entrée de buse (4) et un débouché de buse (5) le long d'un axe longitudinal de passage (6), dans laquelle le passage (2) converge de manière continue en direction de son débouché (5) dans une partie convergente (8) jusqu'à un étranglement (10) du passage (2) à moins de 40 % de l'aire en section transversale (12) au niveau de l'entrée (13) de la partie convergente (8), dans laquelle le passage (2) diverge de manière continue à partir de l'étranglement (10) dans une partie divergente (9) jusqu'au débouché (5) du passage (2) à plus de 130 % de l'aire en section transversale (11) au niveau de l'étranglement (10),
**caractérisée en ce que**,
dans toute la partie divergente (9), la paroi du passage (2) présente au maximum un angle d'inclinaison par rapport à l'axe longitudinal de passage (6) de 5°, et la longueur (L_{D}) de la partie divergente (9) est inférieure à 5 fois le diamètre (dₘᵢₙ) de l'étranglement (10),
et aucune partie d'étranglement cylindrique présentant une longueur entre la partie convergente (8) et la partie divergente (9) n'étant prévue, de sorte que la partie convergente (8) se prolonge, au niveau de l'étranglement (10), directement par la partie divergente (9).

2. Buse de découpe au laser (1) selon la revendication 1, **caractérisée en ce que** l'angle d'inclinaison moyen (α_{K}) de la paroi du passage (2) par rapport à l'axe longitudinal de passage (6) dans la partie convergente (8) est supérieur à 5°, de préférence supérieur à 7°, et/ou inférieur à 15°, de préférence inférieur à 13°.

3. Buse de découpe au laser (1) selon l'une des revendications précédentes, **caractérisée en ce que** l'angle d'inclinaison moyen (α_{D}) de la paroi du passage (2) par rapport à l'axe longitudinal de passage (6) dans la partie divergente (9) est inférieur à 4,0°, de préférence inférieur à 3,0°, de préférence encore inférieur à 2,0° et/ou supérieur à 1,0°.

4. Buse de découpe au laser (1) selon l'une des revendications précédentes, **caractérisée en ce que** la partie convergente (8) se prolonge par la partie divergente (9) sans arête au niveau de l'étranglement (10) .

5. Buse de découpe au laser (1) selon l'une des revendications précédentes, **caractérisée en ce que** le passage (2) comprend en outre une partie d'afflux (7) en particulier cylindrique, qui est disposée en amont de la partie divergente (9) du côté de l'entrée.

6. Buse de découpe au laser (1) selon l'une des revendications précédentes, **caractérisée en ce que** la partie divergente (9) est plus longue que la partie convergente (8), de préférence présente une longueur (L_{D}) qui vaut plus de 1,4 fois et/ou moins de 1,7 fois la longueur (L_{K}) de la partie convergente (8).

7. Buse de découpe au laser (1) selon l'une des revendications précédentes, **caractérisée en ce que** la longueur (L_{D}) de la partie divergente (9) est inférieure à 4 fois, de préférence inférieure à 3 fois, le diamètre (dₘᵢₙ) de l'étranglement (10) et/ou supérieure à 2 fois le diamètre (dₘᵢₙ) de l'étranglement (10).

8. Buse de découpe au laser (1) selon l'une des revendications précédentes, **caractérisée en ce que** l'aire en section transversale (14) du débouché (5) vaut plus de 140 %, de préférence plus de 180 % et/ou moins de 250 %, de préférence moins de 220 %, de l'aire en section transversale (11) de l'étranglement (10).

9. Buse de découpe au laser (1) selon l'une des revendications précédentes, **caractérisée en ce que** la partie convergente (8) comprend au moins dans certaines parties une paroi courbée par rapport à l'axe longitudinal de passage (6), de préférence présentant un rayon de courbure comprise entre 4 et 8 mm, et/ou **caractérisée en ce que** la partie divergente (9) comprend au moins dans certaines parties une paroi courbée par rapport à l'axe longitudinal de passage (6), de préférence présentant un rayon de courbure comprise entre 20 et 30 mm.

10. Buse de découpe au laser (1) selon l'une des revendications précédentes, **caractérisée en ce que** le diamètre (d_{MI}) du débouché (5) vaut entre 1,8 et 3,5 mm, et/ou
**caractérisée en ce que** le diamètre (dₘᵢₙ) de l'étranglement (10) vaut entre 1,3 et 3,0 mm.

11. Buse de découpe au laser (1) selon l'une des revendications précédentes, **caractérisée en ce que** la partie convergente (8) présente une longueur (L_{K}) comprise entre 3,5 et 4,5 mm, et/ou
**caractérisée en ce que** la partie divergente (9) présente une longueur (L_{D}) comprise entre 5,0 et 7,0 mm.

12. Buse de découpe au laser (1) selon l'une des revendications précédentes, **caractérisée en ce que** le diamètre extérieur (d_{MA}), côté débouché, de la buse (1) vaut entre 3,0 et 5 mm.

13. Buse de découpe au laser (1) selon l'une des revendications précédentes, **caractérisée en ce que** la buse (1) comprend, côté débouché, une surface périphérique conique (16), laquelle présente une longueur (L_{KON}) comprise entre 4,0 et 5,0 mm et de préférence un angle d'inclinaison (α_{KON}) par rapport à l'axe longitudinal de passage (6) compris entre 20 et 30°.

14. Buse de découpe au laser (1) selon l'une des revendications précédentes, **caractérisée en ce que** la buse (1) comprend une surface frontale (15) s'étendant en particulier perpendiculairement à l'axe longitudinal de passage (6), laquelle surface frontale entoure le débouché (5) de manière annulaire et présente une largeur de 0,3 à 0,7 mm.

15. Système d'usinage par laser (20) comportant une buse de découpe au laser (1) selon l'une des revendications précédentes, le système comprenant de préférence une régulation de distance capacitive de la distance buse-pièce, laquelle régulation correspond à la régulation de la capacité entre la buse (1) et la pièce (22).

16. Système d'usinage par laser (20) selon la revendication 15, **caractérisé en ce que** le système (20) comprend une tête d'usinage (21) équipée de la buse de découpe au laser (1) pour l'usinage par découpe au laser tridimensionnel et/ou
**caractérisé en ce que** le système (1) comprend, en tant que source laser, un laser à diodes, un laser à CO2 ou à corps solide, en particulier un laser à disque, de préférence présentant une puissance maximale d'au moins 2 kW.

17. Système d'usinage par laser (20) selon l'une des revendications 15 ou 16, **caractérisé en ce qu'**au moyen de la source laser du système (1), un faisceau laser présentant un produit des paramètres du faisceau ≤ 8 mm*mrad, de préférence ≤ 4 mm*mrad, de préférence encore ≤ 2 mm*mrad, peut être produit.

18. Procédé permettant de faire fonctionner un système d'usinage par laser (1) selon l'une des revendications 15 à 17, **caractérisé en ce qu'**un usinage par découpe au laser tridimensionnel est effectué à l'aide de la buse (1), lors duquel un gaz de découpe à une pression comprise entre 8 et 23 bars est acheminé à la buse (1) du côté de l'entrée et effectue au moins par intermittence une découpe d'un profilé métallique (22) présentant une épaisseur de pièce de 1 à 4 mm pour une distance de la buse (1) par rapport à la surface de pièce dans une plage de distances entre 2 et 6 mm.
